# EUROPEAN PATENT SPECIFICATION

(11) **EP 2 377 273 B1**
(45) Date of publication and mention of the grant of the patent: **26.08.2015**
(21) Application number: 09837746.8
(22) Date of filing: 12.01.2009
(51) Int. Cl.: H04L 12/701, H04L 12/741, H04L 12/721, H04L 12/46

(54) **REDUCING PROPAGATION OF MESSAGE FLOODS IN COMPUTER NETWORKS**
EINDÄMMUNG VON NACHRICHTENÜBERSCHWEMMUNGEN IN COMPUTERNETZWERKEN
RÉDUCTION DE LA PROPAGATION DES INONDATIONS DE MESSAGES DANS DES RÉSEAUX D'ORDINATEURS

(43) Date of publication of application: 19.10.2011
(73) Proprietor: Hewlett-Packard Development Company, L.P., Houston, TX 77070 (US)
(72) Inventor: SCHLANSKER, Michael, Palo Alto California 94304-1100 (US); YALAGANDULA, Praveen, Palo Alto California 94304-1100 (US); KARP, Alan H., Palo Alto California 94304-1100 (US)
(74) Representative: Zimmermann, Tankred Klaus
(86) International application number: PCT/US2009/030768
(87) International publication number: WO 2010/080163

(56) References cited:
- US-A1- 2005 021 846
- US-B1- 6 266 705
- US-B1- 6 735 670
- US-B1- 6 804 236
- US-B2- 7 346 706
- US-B2- 7 408 930

## Description

### BACKGROUND

Computer networks are typically comprised of a number of network switches which connect a group of computers together. Ideally, computer networks pass messages between computers quickly and reliably. Additionally, it can be desirable that a computer network be self-configuring and self-healing. In Ethernet switching networks, a spanning tree algorithm is often used to automatically generate a viable network topography. However, there are several challenges when implementing Ethernet switching networks within large datacenters and computer clusters. One challenge relates to instances where the network switches do not have the necessary information to deliver a message to its destination. In this case, the network switches broadcast the message through out the entire network, resulting in a message flood. The message flood eventually results in the delivery of the message to the desired end station, but produces a large volume of network traffic. In large scale networks, where the number of end stations is large, the likelihood and magnitude of message floods increases dramatically.

US 2005/021846 A1 discloses a method of handling datagrams in a network device coupled to other network devices. The method includes the steps of receiving an incoming datagram at a port of the network device, determining an egress port for the incoming datagram based on a destination address contained in the incoming datagram and a lookup of an address resolution lookup table and performing a lookup of the ARL table based on a source address contained in the incoming datagram to determine whether the source address has been learned previously. The method also includes the steps of writing an entry into the ARL table when the source address has not been learned previously, determining whether the other network devices have learned the source address when the source address has been learned previously and continuing to relay a learning message with the source address to the other network devices when it is determined that the other network devices have not learned the source address.

US 6266705 B1 teaches a look up mechanism for accessing a random access memory to obtain forwarding information for data frames being transported among ports of a high-performance switch is provided. The look up mechanism includes a multi-page look up table and associated hashing technique. A media access control address and a virtual local area network identifier are transformed with a hash function to obtain a hash key. The hash key is an address pointing to a particular entry in the look up table.

US 7346706 B2 teaches a method for selecting one of a number of equivalent paths in forwarding a network message from a node of a communication network. A source and destination address is provided for the network message. The addresses are formed of individual bit values, and these values have a relative mapping between them. The relative mapping is decorrelated to obtain a decorrelated address pair. A randomized selection function is applied to the decorrelated address pair to produce an index which is derived from the relative sequence of bit values of the decorrelated address paid. The index is then used to select one of the equivalent paths.

It is the object of the invention to provide a computer network and a method, which permit reducing flooding in an improved manner.

This object is achieved by a computer network according to claim 1 and a method according to claim 5.

### BRIEF DESCRIPTION OF THE DRAWINGS

The accompanying drawings illustrate various embodiments of the principles described herein and are a part of the specification. The illustrated embodiments are merely examples and do not limit the scope of the claims.
Fig. 1 is a diagram of one illustrative computer network, according to one embodiment of principles described herein.
Fig. 2 is a diagram of a portion of an illustrative computer network, according to one embodiment of principles described herein.
Fig. 3 is a diagram of an illustrative method for a network switch to determine how to route an incoming message, according to one embodiment of principles described herein.
Fig. 4 is a diagram of a portion an illustrative computer network which limits message flooding to a relevant portion of the computer network, according to one embodiment of principles described herein.
Fig. 5 is a diagram of an illustrative method for using a local unique constant in a hash function to reduce message flooding, according to one embodiment of principles described herein.
Fig. 6 is a flowchart showing an illustrative method for reducing propagation of message floods in computer networks, according to one embodiment of principles described herein.

Throughout the drawings, identical reference numbers designate similar, but not necessarily identical, elements.

### DETAILED DESCRIPTION

The network switches which make up a computer network incorporate forwarding tables which contain forwarding information required to route messages to their intended destination. Forwarding tables use caches that are based on techniques which hash the end station address to implement destination lookup tables. After a forwarding route is cached, switches forward data only on the port that sends data toward its intended destination.

However, the forwarding tables are typically stored on random access memory (RAM) with limited memory capacity, which may prevent the network switch from retaining a complete set of forwarding data. With limited size RAM, hash collisions result in hash table misses. Hash table misses cause flood type broadcasting within the network that decreases network performance. Existing systems do not fully utilize the capabilities of neighboring switches to limit the propagation of flooding to relevant portions of the network when forwarding cache misses result in a broadcast.

Additionally, the network switches depend on the proper forwarding information being propagated through the network. If the destination of an incoming message can be matched with proper routing information contained within the forwarding table, the switch forwards the message along the proper route. However, if there is no routing information that corresponds to the desired destination, the switch broadcasts the message to the entire network. This creates message flood which propagates through the entire computer network, eventually reaching the desired end station. Particularly in large computing networks, this message flood can consume a large portion of the network capacity, resulting in decreased performance and/or the requirement to build a more expensive network that has far greater capacity than would otherwise be required.

This specification describes networking techniques which reduce propagation of message floods while still allowing the message to reach the desired end station. In particular, the specification describes techniques that improve the ability of neighboring switches to mitigate broadcast penalties without the requirement for hardware changes or upgrades. This allows networks to incorporate smaller forwarding caches while providing an equivalent level of performance.

Existing forwarding techniques suffer from two inadequacies. First, since a forwarding cache in one switch uses the same hashing function as forwarding caches in neighboring switches, cache collisions produced in one switch may be replicated in neighboring switches. In particular, the broadcasting action within one switch may cause cache misses and broadcasting to neighboring switches. This may cause cache missing to propagate from switch to switch throughout a computer network.

According to one illustrative embodiment, distinct hash functions can be implemented within each switch. With this technique, even when a hash collision occurs within a forwarding cache in one switch, it is unlikely that a hash collision occurs in a neighboring switch. This can improve the neighboring switches ability to block unnecessary broadcast traffic. By introducing the concept of a distinct hash within each switch, broadcast traffic and wasted network bandwidth is reduced.

Limiting the scope for broadcast traffic also reduces the number of unnecessary forwarding entries that must be maintained within switch caches that are not directly on the communication path. A second inadequacy is that is many situations, it is difficult for a switch that is a neighbor to a switch that is missing its cache to learn the forwarding direction for missing end station addresses. The specification describes a method to detect that cache missing is occurring and to instruct neighboring switches as the location of the missing end station in order to eliminate unnecessary propagation of broadcast traffic.

Additionally or alternatively, a method for neighboring switches to learn forwarding direction for missing end station address can be implemented. First, a network switch detects conditions that are symptomatic of cache missing. In this situation, selective broadcasting is intentionally performed to deposit forwarding entries in the caches of switches that are in the neighborhood of the missing switch. This again improves the ability of neighboring switches to limit the effects of broadcast traffic. With this invention, networks can be constructed using simpler hashing functions and smaller forwarding table RAM while reducing the volume of unnecessary broadcast traffic.

In the following description, for purposes of explanation, numerous specific details are set forth in order to provide a thorough understanding of the present systems and methods. It will be apparent, however, to one skilled in the art that the present apparatus, systems and methods may be practiced without these specific details. Reference in the specification to "an embodiment," "an example" or similar language means that a particular feature, structure, or characteristic described in connection with the embodiment or example is included in at least that one embodiment, but not necessarily in other embodiments. The various instances of the phrase "in one embodiment" or similar phrases in various places in the specification are not necessarily all referring to the same embodiment.

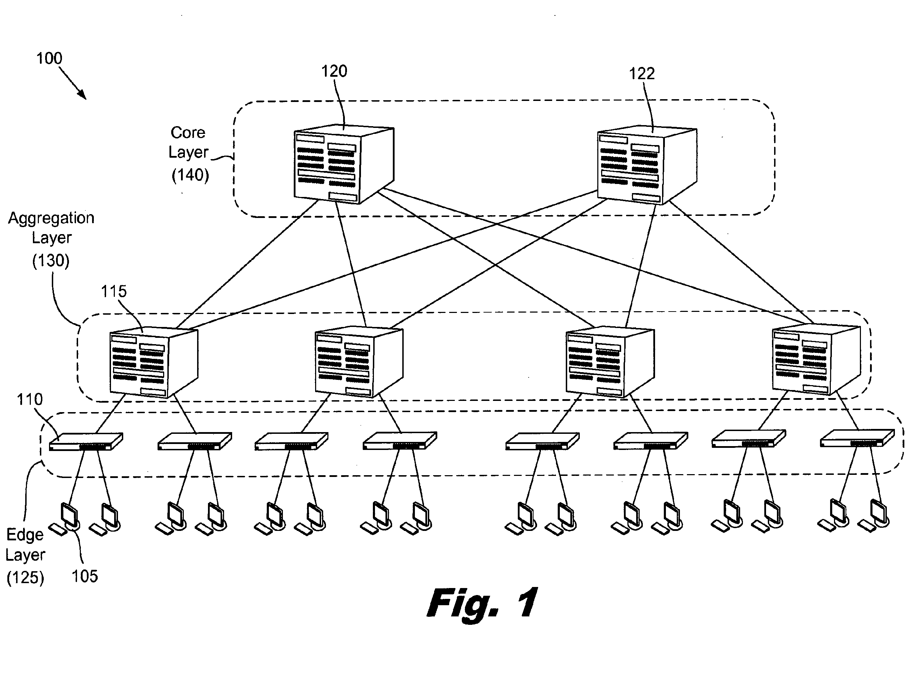

Fig. 1 shows one illustrative embodiment of a three tiered computer network which connects a number of end stations (105). Each end station (105) is connected to an edge switch (110). The edge switches (110) are connected in turn to larger aggregation switches (115) which are connected to core switches (120, 122). Thus, this illustrative computer network has a three tiered structure consisting of an edge layer (125), an aggregation layer (130), and a core layer (140). Using the computer network (100), any end station (105) can communicate with any of the other end stations (105).

The computer network topology and management is important to maximize the performance of the computer network, reduce costs, increase flexibility and provide the desired stability. Early in the development of computer networks, a number of problems had to be overcome. One of those problems was messages being trapped in endless loop as a result of a minor change to the network topology, such as adding a link or an end station. The trapped message would be repeatedly passed between various network components in a closed cycle that never allowed the message to reach the intended destination. This could generate enormous volumes of useless traffic, often making a network unusable.

A spanning tree algorithm was developed to eliminate potential cycles within a network. The spanning tree algorithm identifies a set of links that spans the network and allows each end station to communicate with every other end station. Redundant links were blocked to prevent loops which could give rise to a cycle. After a spanning tree is identified throughout an entire network, each switch within the network can use a very simple forwarding procedure. When a message is sent from any end station A to any end station B, each switch forwards an incoming message on all active (spanning tree) ports except the port on which the message arrived. This process is called flooding and can be performed with no routing information except information needed to define the active ports. This simple procedure guarantees correct network transmission. Every message sent from an end station A traverses the entire spanning tree and is guaranteed to arrive at end station B, where it is received when B recognizes its target address. Other end stations drop the message addressed to end station B because it is not addressed to them. The use of the spanning tree prevents endless message transmission. When a message reaches the end of the spanning tree, no further message transmission occurs.

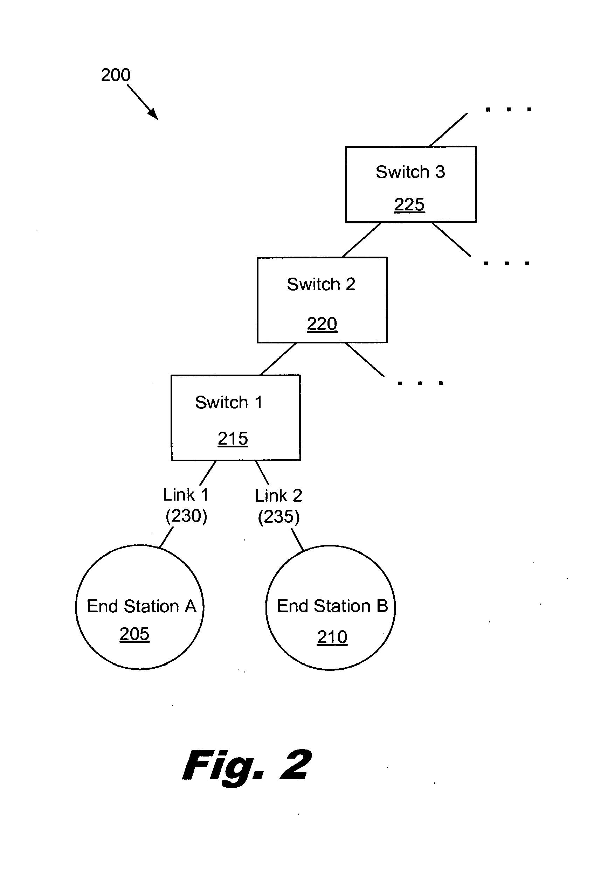

For large networks, this broadcast-based, procedure can be very inefficient. Fig. 2 illustrates a portion of a computer network (200) in which a spanning tree has been implemented. The computer network (200) contains end station A (205), end station B (210), and a number of upstream switches (215, 220, 225). When a message is sent from end station A (205) to a neighboring end station B (210), that message traverses every link in the entire spanning tree even though communications could be supported from A to B using only the links (230, 235) between end station A (205), switch 1 (215), and end station B (210).

Adaptive forwarding has been developed to enhance communications efficiency using forwarding tables that learn the proper route to each destination. Messages contain MAC (Media Access Controller) addresses that uniquely identify all end stations within an Ethernet network. Each message has a source MAC address and destination MAC address. The source indicates the origin end station, and the destination indicates the target end station. Whenever a message is received on a link with source address X, then a forwarding table entry is created so that all subsequent messages destined for X are forwarded only this link. For example, after a first message is sent from end station B (205) with source address B, a forwarding entry to B is created within switch 1 (215). Subsequent messages sent into switch 1 (e.g. from end station A) with destination address B traverse only link 1(230) and link 2 (235). This procedure is used to adaptively create forwarding tables throughout large networks to reduce network traffic. This adaptive forwarding procedure requires that the switches efficiently implement hardware based lookup tables. Lookup hardware reads the input destination MAC address, which consists of either 48 or 64 bits of address information, depending on the addressing standard. The lookup result, if successful, identifies the unique forwarding port to the addressed end station. If a forwarding entry for the input MAC address is not found, then the message is forwarded on all active links except the link on which the message arrived.

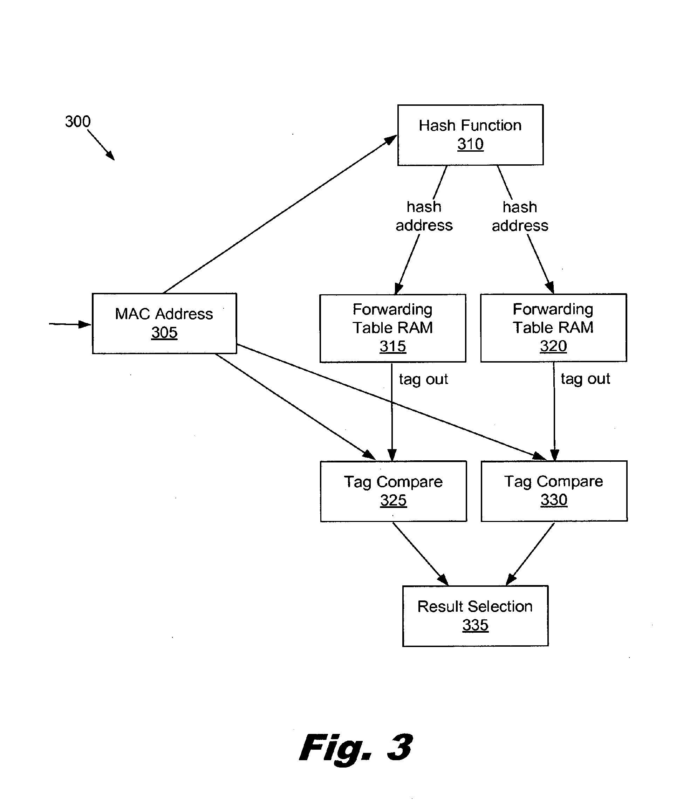

Efficient hash mapping approaches have been developed to implement hardware lookup for adaptive forwarding. Fig. 3 is a diagram of an illustrative associative lookup method (300). An input MAC address (305) is received on the left. The MAC address (305) is received by a hash function (310) which performs a randomizing function that produces a consistent random value for each MAC address read. In a simple example, the hash function (310) may multiply the MAC address by a very large prime number and select ten digits from the result. These ten digits are a quasi-random number which can be consistently generated given a MAC address. Consequently, whenever the same MAC address is applied on input, the same random address is produced. The hash function allows fast look up and even distribution of MAC addresses within the RAM address space. In one example system, the hash function reads a 48 bit MAC address and produces a 12 bit hash address. This hash address is used to lookup forwarding entries simultaneously within the two 4096 word lookup Forwarding Table Random Access Memory (RAM) (315, 320). Table entries are stored within two RAMS totaling 8192 potential entries in this two-way set associative lookup. Each entry is marked as empty or not empty. Each non-empty entry holds a forwarding instruction consisting of a tag field that validates a match and a result field that indicates the correct forwarding action when the match occurs. In this example, the tag field contains the full destination MAC address and the result field contains the index of the port on which data should be sent to reach that address. For example, if a matching entry results in the value 6, then the 6th port is used to forward data.

During destination address look up, two potential forwarding instructions result. The tag fields are then compared in by the tag compare modules (325, 330). If the tag field for one of those forwarding instruction exactly matches the input destination MAC address, then the result field from the matching instruction can be used to forward data.

Whenever a message enters a switch, both its source address and the destination address are processed. The destination address is processed to determine the correct forwarding port. The source address is processed to determine whether a new entry should be placed in the forwarding table. When a source address is processed, the lookup table is queried to see whether that source address is already in the table. If no entry for the source address lies in the table, then there are no current instructions on how to reach the end station having that source address. In this case, a new entry can be added into the table. If either entry is empty, then the value for that forwarding entry is set with tag field equal to the source address and result field equal to the port on which the message arrived into the switch. For this switch, subsequent messages sent to that source address will be sent only on the correct forwarding port. If the address is already in the table, and the correct forwarding port is indicated no further action is needed. If the address is already in the table and an incorrect forwarding port is indicated, then the entry is overwritten with correct forwarding instructions.

As new entries are entered into the table, a replacement strategy is needed. When a message arrives from an end station having a given source address, the lookup process may determine that both entries are nonempty and do not match the newly arriving message. In this case, the new entry may displace a randomly selected entry from the two-way set. Thus, replacement "flips a coin" and decides which entry is to be replaced with the new entry. There are occasions when multiple, frequently used destinations happen to hash to the same hash address. For this two-way set associative scheme, only two distinct forwarding instructions can be held at the same hash address location within each of the two RAMs. If there is a third common communication to the same hash address, at least one of these communications will repeatedly fail to identify forwarding instructions. This is called a forwarding table lookup miss. In this case, data is flooded or forwarded on all spanning tree ports except for the port on which the message arrived.

According to one illustrative embodiment, several changes can be made to the architecture described above which may reduce cost and improve the performance of the computer network. A reduction in forwarding efficiency occurs when multiple destination addresses produce the same hash address. For example, in a one-way set associative table, only a single forwarding entry can reside at each hash location. When multiple forwarding addresses hash to the same location, forwarding misses will cause some incoming messages to be flooded.

At least two features can be introduced into the network architecture which reduce propagation of message floods within the network. The purpose of these features is to assist neighboring switches in halting the propagation of broadcast floods throughout a larger network and to reduce the total forwarding table space needed within the network. Reducing table space requirements again reduces the number of flooding actions within the network as each required entry can replace another needed entry. To simplify examples, we assume switches use a one-way associative hash table to implement adaptive forwarding.

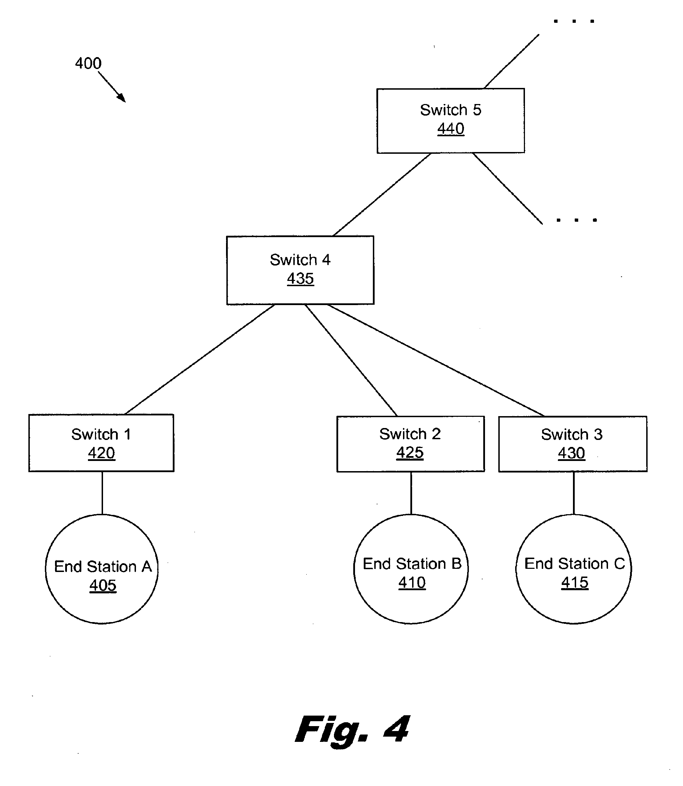

Fig. 4 shows an illustrative computer network (400) where it is assumed that, due to an unfortunate choice of destination addresses, end stations B (410) and end station C (415) conflict or map to the same hash address. Conflicting B and C forwarding entries cannot be simultaneously present within any switch. For this example, it is assumed that a large bidirectional communication flow occurs between end stations A and B (405, 410) as well as another large bidirectional flow between end stations A and C (405, 415). As traffic alternates first from end station A to B (405, 410), and then from end station A to C (405, 415), switch 4 (435) cannot hold forwarding entries for both communication flows. One of the flows will miss during its forwarding lookup and will flood messages on all paths including the required communication path. Determining which flow misses depends upon the replacement order for forwarding entries for the conflicting B and C end stations (410, 415). After end station B (410) communicates with end station A (405), then messages from end station A (405) to end station B (410) no longer miss, but messages from end station A (405) to end station C (415) now do miss. Similarly, after end station C (415) communicates with end station A (405), then messages from end station A (405) to end station C (415) no longer miss, but messages from end station A (405) to end station B (410) now do miss.

Assume that, after the network is initialized, a very first communication is from end station A (405) to end station B (410). Since, no switch within the entire network has a forwarding entry for end station B (410), the message is broadcast throughout the entire spanning tree and the adaptive forwarding procedure places an entry for end station A (405) in every switch. Now, all messages sent to end station A (405) traverse the proper communication path. For example, messages sent from either end station B (410) to end station A (405) or from end station C (415) to end station A (405) never traverse switch 5 (440). Consequently, switch 5 (440), and more remote switches, may never discover forwarding entries for the end station B (410) or end station C (415). As a result, misses at switch 2 (435) for flows from end station A (405) to end station B (410) or from end station A (405) to end station C (415) propagate throughout large regions of the network that have no knowledge of the location of end station B (410) or end station C (415).

This problem can be alleviated by ensuring that switch 5 (440) becomes aware of the location of end stations for which a miss is repeatedly occurring. If switch 5 (440) has a forwarding entry for end station B (410) and switch 5 (440) receives a message for end station B (410) from switch 4 (435), then that message can be dropped because it has arrived on an input link that is also the correct route to the destination. If switch 5 (440) can learn the needed end station location information, switch 5 (440) can provide a barrier that limits unnecessary message propagation due to forwarding table misses in switch 4 (435).

One approach to propagating needed information uses logic in each switch to detect whenever a new forwarding entry is entered. For example, a message from end station B (410) to end station A (405) may cause a new forwarding entry for B to be added in switch 4 (435). This indicates that a message sent to end station B (410) would have missed just prior to this addition, and thus, misses to end station B (410) may likely happen in the future whenever this new entry is replaced. When the message from end station B (410) to end station A (405) is processed, and the B entry is added, this message is artificially flooded even though the lookup entry for end station A (405) lies in the forwarding table. This allows that on a subsequent miss from end station A (405) to end station B (410) at switch 4 (435), switch 5 (440) will block flooding that might otherwise propagate throughout the network. While the link connecting switch 4 (435) to switch 5 (440) is flooded, flooding does not propagate past switch 5 (440).

This artificial flooding action to teach the network the location of end stations need not be performed on every new entry insertion as that might waste undue link bandwidth. The artificial flooding action may be caused with some low probability each time a new entry is added. For example, when a message from end station B (410) to end station A (405) is processed and a replacement of the B forwarding entry occurs, the switch can flood with some low probability p (e.g. p=.01). This allows that switch 5 (440) will eventually (after about 100 replacements of the destination at switch 4 (435)) learn the location for an end station that is repeatedly missing at switch 4 (435). The forwarding probability can be adjusted to produce the desired forwarding frequency. For example, a low forwarding probability could be used where there is a large number of communication flows and an inadequate hash table size such that the forwarding process can miss frequently. This can reduce the overall network traffic and minimize the expense of broadcasting messages over a long distance when this missing occurs. By informing a neighboring switch of the location of the conflicting end stations, the neighboring switch can be enabled to automatically act as a barrier to limit the flooding of messages to the remainder of the computer network.

A significant problem remains to be solved. If identical hash functions are used within all the switches, the switches will all exhibit the same conflicts. For example, when switch 4 (435) repeatedly misses as traffic is alternatively sent to end stations B and C (410, 415), then switch 5 (440) has the same conflict and may again propagate misses to its neighbors. In our example, forwarding entries for B and C cannot be simultaneously held within switch 4 (435) or switch 5 (440). Since switch 5 (440) is of identical construction and uses the same hash function, switch 5 (440) also cannot simultaneously hold entries for destinations of end stations B and C (410, 415).

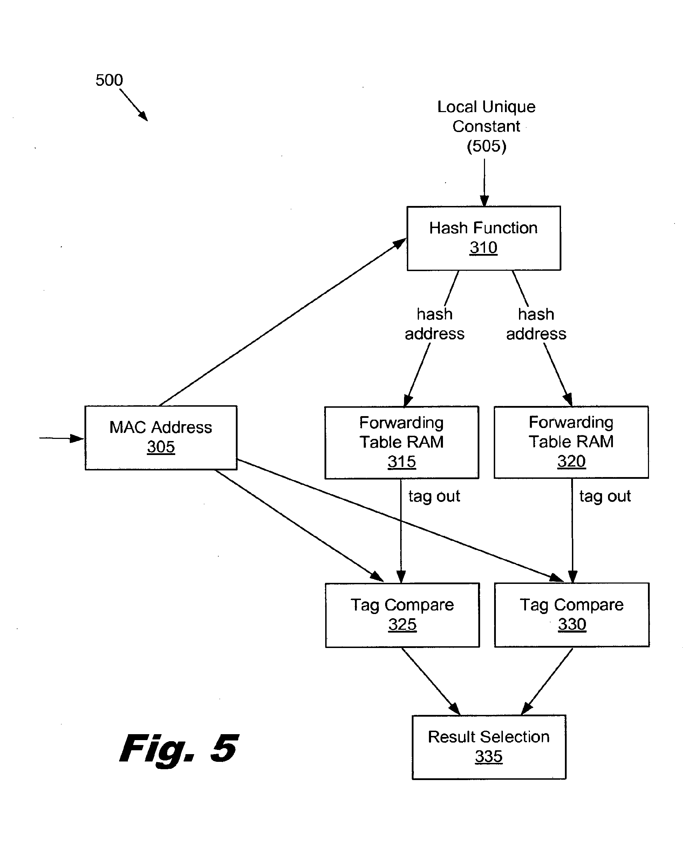

This problem is rectified by the illustrative associative lookup method (500) shown in Fig. 5 which has a new input (505) to the hashing function. As discussed above, each switch performs a hash operation on incoming MAC addresses (305). However, if each switch performs the same hash operation on all incoming MAC address, all the switches will exhibit identical behavior. By introducing a local unique constant (505) or other variable into the hash function (310), each switch will then categorize the incoming MAC address (305) differently. According to one illustrative embodiment, the local unique constant (505) used by the switch may be its MAC address. The switch's MAC address then serves as an operand in the hash function (505) to ensure that a distinct hashing function is applied to end station addresses at each switch. This ensures that the likelihood of neighboring switches exhibiting the same forwarding table lookup miss is extremely low.

Returning to the example illustrated in Fig. 4, the situation has significantly improved when a local unique constant is used as an operand in the hash function at each switch. The same difficulty is confronted when an unlucky selection of the B and C target addresses leads to a conflict in the switch 4 (435) lookup table. Again, this causes flooding to neighboring switches when a message to end station B (410) or end station C (415) misses during forwarding table lookup. However, now the surrounding switches, including switch 5 (440), use a distinct hashing function to identify lookup table locations. With this new hash, it is very unlikely that end station B (410) and end station C (415) also conflict within switch 5 (440). Thus, now switch 5 (440) forms an effective barrier to the misses produced in switch 4 (435). This architecture reduces the total number of miss messages propagated within a fabric as well as the total amount of memory needed for lookup tables in a fabric.

Previously, when a repeated miss occurs at a switch, that miss might also be repeated at a neighboring switch. Under some conditions, misses can propagate throughout the entire fabric. These misses also systematically flood the network with potentially useless forwarding entries. In our example, conflicting flows from end station A to end station B and end station A to end station C cause repeated flooding that inserts forwarding entries for end station A throughout the network, potentially displacing useful entries even where not needed. With this improved architecture, misses still occur within a switch, but neighboring switches limit costly effects of flooding by acting as a barrier that reduces wasted bandwidth and wasted forwarding table space.

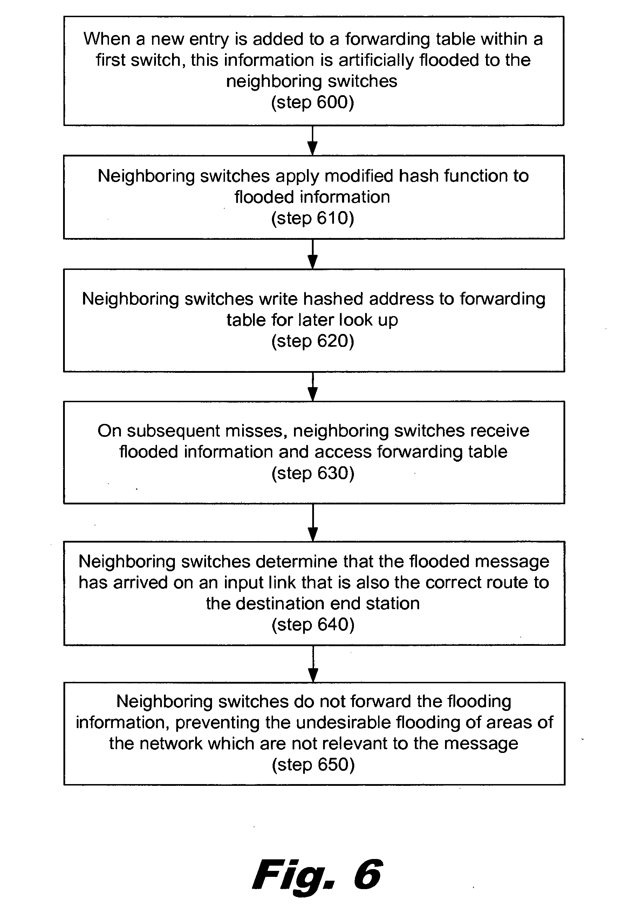

Fig. 6 is a flow chart of an illustrative method for reducing propagation of message floods in computer networks. In a first step, information is flooded to neighboring switches when a new entry is added the forwarding table of a first switch (step 600). The neighboring switches apply unique hash functions to the flooded information (step 610) and store the information in the resulting forwarding table entry (step 620). When subsequent misses occur, the neighboring switches receive the flooded information and access the forwarding table (step 630) and determine that the flooded message has arrived on an input link that is also the correct route to the destination (step 640). The message can then be dropped, thereby reducing the undesirable flooding of information throughout areas of the computer network that are not needed to convey the message to its intended destination (step 650).

In sum, by propagating missed forwarding information throughout the network, neighboring switches learn pertinent information about switches which may have recurring forwarding table misses. Introducing variations in the calculation of the hash function at each switch ensures that there is a very low likelihood that neighboring switches will exhibit the same forwarding table miss. The neighboring switches can then act as a barrier to prevent unnecessary flooding into other areas of the computer network after a forwarding table miss. By applying these principles, the overall efficiency of a computer network can be improved without replacing switches or increasing the forwarding look up table RAM in each switch.

The preceding description has been presented only to illustrate and describe embodiments and examples of the principles described. This description is not intended to be exhaustive or to limit these principles to any precise form disclosed. Many modifications and variations are possible in light of the above teaching.

## Claims

1. A computer network (400) comprising:
a first switch (435); and
a neighboring switch (440);
wherein said first switch (435) is configured to perform an intentional flooding of a message when a new forwarding table entry is added to a forwarding table (315, 320) of said first switch (435) even though a destination address of the message is present in the forwarding table, wherein said neighboring switch (440) is configured to acquire information relating to a proper destination through said intentional flooding of information,
wherein said neighboring switch (440) is configured to act as a barrier to prevent a subsequent message which is received on a destination port, that is also the correct route to a destination address of said message from propagating into unrelated areas of said computer network (400), and
wherein said first switch (435) and said neighboring switch (440) are configured to use different unique hash functions (310) to calculate hashed addresses for forwarding table entries such that likelihood of said first switch (435) and said neighboring switch (440) having an identical forwarding table conflict is significantly reduced.

2. The network of claim 1, wherein said first switch (435) is configured to perform said intentional flooding for only a fraction of new forwarding table entries added to said forwarding table (315, 320) of said first switch (435).

3. The network of claim 1, wherein said switches (435, 440) are configured to use a unique local constant in a hash function (310) to calculate hashed addresses.

4. The network of claim 3, wherein said unique local constant is a local MAC address (305).

5. A method of reducing flooding within a computer network (400) comprising:
intentionally flooding said computer network (400) when a new forwarding table entry is made by a first network switch (435) even though a destination address of the message is present in the forwarding table, such that information contained within said new forwarding table entry is recorded by a neighboring network switch (440);
said neighboring switch (440) blocking a subsequent message which is received on a destination port, that is also the correct route to a destination address of said message
said neighboring switch (440) applying a locally unique hash function (310) to a MAC address associated with said intentionally flooded information to generate a hash address, wherein said locally unique hash function (310) is different from a hash function used by said first network switch (435); and
said neighboring switch (440) recording said intentionally flooded information within a forwarding table (315, 320) at said hash address.

6. The method of claim 5, further comprising:
said neighboring switch (440) receiving a subsequent message on an input port;
said subsequent message containing an associated destination address and a source address;
said neighboring switch (400) accessing said forwarding table entry to determine if a destination port associated with said destination address is identical to said input port; and
if said destination port associated with said destination address is identical to said input port, said neighboring switch (440) refuses to forward said message to other ports.

7. The method of claim 6, further comprising:
said neighboring switch (440) using a unique local constant (505) to generate said unique local hash function, said unique local constant being a MAC address of said neighboring switch (440).

## Patentansprüche

1. Computernetzwerk (400), umfassend:
einen ersten Switch (435); und
einen benachbarten Switch (440);
wobei der erste Switch (435) dafür konfiguriert ist, ein absichtliches Fluten einer Nachricht durchzuführen, wenn ein neuer Weiterleitungstabelleneintrag zu einer Weiterleitungstabelle (315, 320) des ersten Switchs (435) hinzugefügt wird, obwohl eine Zieladresse der Nachricht in der Weiterleitungstabelle existiert, wobei der benachbarte Switch (440) dafür konfiguriert ist, Informationen bezüglich eines geeigneten Ziels durch das absichtliche Fluten von Informationen zu erlangen,
wobei der benachbarte Switch (440) dafür konfiguriert ist, als Barriere zu agieren, um eine nachfolgende Nachricht, die an einem Zielport empfangen wird, welcher ebenfalls die korrekte Route zu einer Zieladresse der Nachricht ist, davon abzuhalten, sich in Bereichen des Computernetzwerks (400) zu verbreiten, die in keinem Zusammenhang hiermit stehen, und
wobei der erste Switch (435) und der benachbarte Switch (440) dafür konfiguriert sind, unterschiedliche eindeutige Hashfunktionen (310) zu verwenden, um gehashte Adressen für Weiterleitungstabelleneinträge zu berechnen, so dass die Wahrscheinlichkeit, dass der erste Switch (435) und der benachbarte Switch (440) einen identischen Weiterleitungstabellenkonflikt haben, erheblich reduziert wird.

2. Netzwerk nach Anspruch 1, wobei der erste Switch (435) dafür konfiguriert ist, das absichtliche Fluten nur für einen Teil der neuen Weiterleitungstabelleneinträge durchzuführen, die zu der Weiterleitungstabelle (315, 320) des ersten Switchs (435) hinzugefügt wurden.

3. Netzwerk nach Anspruch 1, wobei die Switches (435, 440) dafür konfiguriert sind, eine eindeutige lokale Konstante in einer Haschfunktion (310) zu verwenden, um gehashte Adressen zu berechnen.

4. Netzwerk nach Anspruch 3, wobei die eindeutige lokale Konstante eine lokale MAC-Adresse (305) ist.

5. Verfahren zur Reduzierung des Flutens innerhalb eines Computernetzwerks (400), umfassend:
absichtliches Fluten des Computernetzwerks (400), wenn ein neuer Weiterleitungstabelleneintrag von einem ersten Netzwerk-Switch (435) erstellt wird, obwohl eine Zieladresse der Nachricht in der Weiterleitungstabelle existiert, so dass die Informationen, die im neuen Weiterleitungstabelleneintrag enthalten sind, von einem benachbarten Netzwerk-Switch (440) aufgezeichnet werden;
wobei der benachbarte Switch (440) eine nachfolgende Nachricht blockiert, die an einem Zielport empfangen wird, welcher ebenfalls die korrekte Route zu einer Zieladresse der Nachricht ist,
wobei der Nachbarswitch (440) eine lokal eindeutige Haschfunktion (310) auf eine MAC-Adressen anwendet, die den absichtlich gefluteten Informationen zugehörig ist, um eine Hash-Adresse zu generieren, wobei die lokal eindeutige Haschfunktion (310) von einer Haschfunktion abweicht, die vom ersten Netzwerk-Switch (435) verwendet wird; und
wobei der benachbarte Switch (440) die absichtlich gefluteten Informationen innerhalb einer Weiterleitungstabelle (315, 320) an der Hash-Adresse aufzeichnet.

6. Verfahren nach Anspruch 5, ferner umfassend:
Erhalten einer nachfolgenden Nachricht an einem Eingangsport durch den benachbarten switch (440);
wobei die nachfolgende Nachricht eine zugehörige Zieladresse und eine Quelladresse enthält;
wobei der benachbarte Switch (440) auf den Weiterleitungstabelleneintrag zugreift, um zu bestimmen, ob ein Zielport, der der Zieladresse zugehörig ist, mit dem Eingangsport identisch ist; und
Verweigern des Nachbarswitchs (440) zur Weiterleitung der Nachricht an andere Ports, falls der Zielport, der der Zieladresse zugehörig ist, mit dem Eingangsport identisch ist.

7. Verfahren nach Anspruch 6, ferner umfassend:
Verwenden einer eindeutigen lokalen Konstante (505) durch den benachbarten Switch (440), um die eindeutige lokale Haschfunktion zu generieren, wobei die eindeutige lokale Konstante eine MAC-Adresse des benachbarten Switchs (440) ist.

## Revendications

1. Réseau informatique (400) comprenant :
un premier interrupteur (435) ; et
un interrupteur voisin (440) ;
dans lequel le premier interrupteur (435) est configuré pour effectuer une inondation intentionnelle d'un message lorsqu'une nouvelle entrée de table de transfert est ajoutée à une table de transfert (315, 320) dudit premier interrupteur (435), bien qu'une adresse de destination du message soit présente dans la table de transfert, ledit interrupteur voisin (440) étant configuré pour acquérir des informations concernant une destination propre par le biais de ladite inondation intentionnelle d'informations,
dans lequel ledit interrupteur voisin (440) est configuré pour agir comme une barrière pour empêcher un message suivant reçu sur un port de destination, qui est également le chemin correct vers une adresse de destination dudit message, de se propager dans des zones non associées dudit réseau informatique (400), et
dans lequel ledit premier interrupteur (435) et ledit interrupteur voisin (440) sont configurés pour employer des fonctions de hachage (310) uniques différentes pour calculer des adresses hachées pour des entrées de table de transfert, de manière à réduire considérablement la probabilité que ledit premier interrupteur (435) et ledit interrupteur voisin (440) aient un conflit de table de transfert identique.

2. Réseau selon la revendication 1, dans lequel ledit premier interrupteur (435) est configuré pour effectuer ladite inondation intentionnelle seulement pour une fraction de nouvelles entrées de table de transfert, ajoutées à ladite table de transfert (315, 320) dudit premier interrupteur (435).

3. Réseau selon la revendication 1, dans lequel lesdits interrupteurs (435, 440) sont configurés pour employer une constante locale unique dans une fonction de hachage (310) pour calculer des adresses hachées.

4. Réseau selon la revendication 3, dans lequel ladite constante locale unique est une adresse MAC locale (305).

5. Méthode destinée à réduire l'inondation dans un réseau informatique (400), comprenant :
l'inondation intentionnelle dudit réseau informatique (400) lorsqu'une nouvelle entrée de table de transfert est effectuée par un premier interrupteur (435) du réseau, bien qu'une adresse de destination du message soit présente dans la table de transfert, de sorte que les informations contenues dans ladite entrée de table de transfert sont enregistrées par un interrupteur voisin (440) du réseau ;
ledit interrupteur voisin (440) bloquant un message suivant reçu sur un port de destination, qui est également le chemin correct vers une adresse de destination dudit message,
ledit interrupteur voisin (440) appliquant une fonction de hachage (310) unique locale à une adresse MAC associée auxdites informations intentionnellement inondées pour générer une adresse de hachage, ladite fonction de hachage (310) unique locale étant différente d'une fonction de hachage utilisée par ledit premier interrupteur (435) du réseau ; et
ledit interrupteur voisin (440) enregistrant lesdites informations intentionnellement inondées dans une table de transfert (315, 320) à ladite adresse de hachage.

6. Méthode selon la revendication 5, comprenant en outre :
ledit interrupteur voisin (440) recevant un message suivant sur un port d'entrée ;
ledit message suivant contenant une adresse de destination associée et une adresse source ;
ledit interrupteur voisin (440) accédant à ladite entrée de table de transfert pour déterminer si un port de destination associé à ladite adresse de destination est identique audit port d'entrée ; et
si ledit port de destination associé à ladite adresse de destination est identique audit port d'entrée, ledit interrupteur voisin (440) refuse d'envoyer ledit message à d'autres ports.

7. Méthode selon la revendication 6, comprenant en outre :
ledit interrupteur voisin (440) employant une constante locale unique (505) pour générer ladite fonction de hachage locale unique, ladite constante locale unique étant une adresse MAC dudit interrupteur voisin (440).
